# EUROPEAN PATENT APPLICATION

(11) **EP 2 921 413 A1**
(43) Date of publication of application: **23.09.2015**
(21) Application number: 12888225.5
(22) Date of filing: 16.11.2012
(51) Int. Cl.: B65B 27/12, B65B 13/26, A01F 15/14

(54) **HIGH-PRECISION MACHINE FOR BINDING BALES AND BINDING METHOD**

(71) Applicant: Hojaoli Energy, S.L., 02400 Hellín (Albacete) (ES); Imabe Iberica, S.A., 28500 Arganda del Rey (Madrid) (ES)
(72) Inventor: GARCÍA NAVARRO, Rafael, 02400 Hellin (Albacete) (ES)
(74) Representative: Pereira Toña, Maria Irache
(86) International application number: PCT/ES2012/000283
(87) International publication number: WO 2014/076322

(57) **Abstract**

HIGH-PRECISION BUNDLE-TYING MACHINE and TYING PROCESS which includes a roller (6), which pulls the first end of the rope (4) when rotating, rolling it around the roller itself; at least, one needle (8) that moves vertically to be threaded through the rope (4), a cutting mechanism (7) which cuts the rope when it reaches the necessary length, and a tying group, consisting of a hydraulic motor (11), a locking clamp (12) and a tying double hook (14) which, by means of a hydraulic cylinder (10), moves to fasten both ends of the rope and turn them to make a knot using such ends. The clamp (12) has two articulated claws (13), operated through pneumatic bottles (17). The roller (6) has a main tube (18) which has an outer square tube on its side (21) and another inner tube (22) which shows both notches (23).

## Description

### PURPOSE OF THE INVENTION

The invention, a high-precision bundle-tying machine and tying process, refers to a machine which allows the automated tying of pressed bundles, preferably of plant or industrial origin, with a special feature: instead of carrying out the process with a metal strip fixed with staples, it is done by means of a plastic rope. The invention also refers to the tying process of bundles with such machine.

The scope of application of this invention falls within the packaging sector, specifically within the scope of bundle, bale and similar packages formation, particularly focusing on machines and tying methods of such bundles.

### BACKGROUND

As is generally known, straw or other plant or industrial products which are bundled by creating pressed bales or bundles which are normally gripped together with a metal wire or strip which, using a machine that has been specially designed for such use, ties it around the bundle and fastens its ends with staples or similar elements.

Even if this type of packaging meets its intended function, it has a disadvantage: its high costs, both due to the use of the metal the wire or strip is made of, as it must have the right resistance, and to the staple tying system.

Therefore, the purpose of this invention is to develop a bundle-tying system which, without losing efficiency, is more cost-effective, avoiding the use of metal and the use of extra fasteners.

Furthermore, and as a reference to the current status of the technique, it should be said that, at least for the applicant, the existence of any other similar machine with such technical, structural and constituent characteristics as those of the machine described and claimed herein is unknown.

### EXPLANATION OF THE INVENTION

Thus, the bundle-tying machine proposed by this invention uses a plastic rope to fasten the bundle by fastening its ends with of a knot.

To do so, the machine, together with a frame with means to move the bundles to be tied, essentially has: a roller which, while turning, pulls the end of the rope, rolling it around the frame itself; a needle that moves vertically to be threaded through the rope; and a cutting mechanism which cuts the rope when It reaches the necessary length. Moreover, it also has a tying group which, fitted with a hydraulic cylinder and a hydraulic motor that act on a pair of clamps and a tying hook and move horizontally to fasten both ends of the rope and thus make a knot.

This allows, in a few operational steps, to roll the rope around the bundle and tie its ends by making a knot, which avoids the use of extra fasteners and enables to tie it by using a plastic rope, which is more cost-effective than a metal wire or strip.

### DESCRIPTION OF THE DRAWING

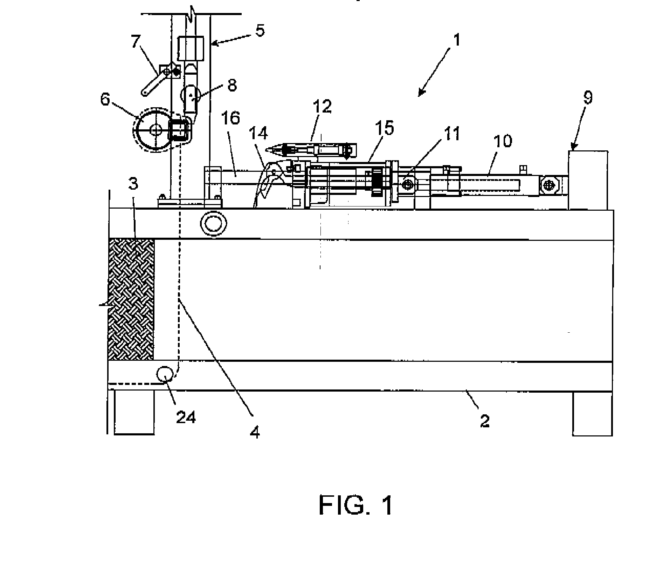

A set of plans is attached to these specifications, as an integral part thereof, to complement the description made herein and to contribute to a better understanding of the features of the invention. Such set Includes, but is not limited to:
Figure number 1.- It shows a schematic sectional view of the side elevation of an example of the bundle-tying machine concerned, represented in one of its first operational stages. It shows that it includes the main parts and elements, together with the settings and layout of each part and element.
Figures number 2 to 5.- They show different sectional views of the example of the machine, pursuant to the invention, included in figure 1, represented in different operational stages thereof.
Figure number 6.- It shows a schematic plan view of the locking clamp Included in the machine. It is represented with one its claws locked, fastening one of the ends of the rope, and the other claw is open, about to fasten the other end of the rope.
Figures number 7 and 8.- They respectively show a plan view and a cross-sectional view of the roller included in the machine. They show its general settings and components.

### PREFERENTIAL DEVELOPMENT OF THE INVENTION

In view of the aforementioned figures and in accordance with the numbering applied, it can be seen that they show an example of the preferential development of the invention, which includes the parts and elements specified and described in detail below.

Thus, as it is observed in such figures, the machine (1) features the following components, conveniently connected to the support frame (2) through which the pressed bundles (3) that are to be tied with the rope (3) are entered; and a vertical structure (5) on the front of the machine, which has a roller (6), a cutting device (7) and, at least, a needle (8) which moves vertically. Such elements are actioned by an air or hydraulic motor (not represented); and by a horizontal structure (9), placed after the vertical structure. Said horizontal structure includes a hydraulic cylinder (10) that activates a hydraulic motor (11) linked to a locking clamp (12) with two articulated claws (13), which also activates a tying double hook (14). This set of motor (11), clamp (12) and hook (14), incorporated into a casing (15) which, by setting up a compact group or a tying group, moves horizontally over a rod (16), so that, thanks to the activation of the hydraulic cylinder (10), said tying group moves towards or away from the vertical structure.

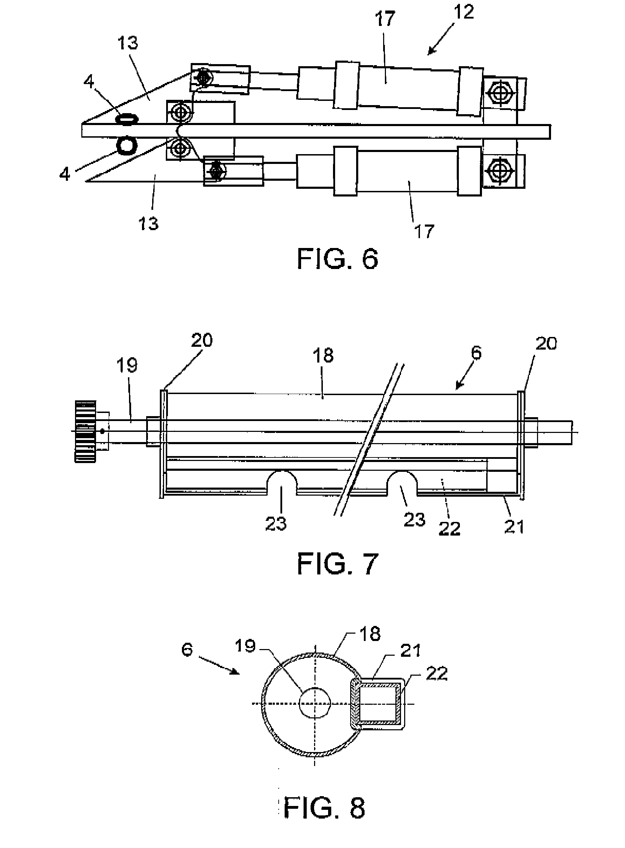

As it is shown in figure 6, the clamp (12) has two articulated claws (13), each of which may be opened or closed (to fasten the rope (4)) thanks to the existence of their respective hydraulic bottles (17) each of the claws Is independently connected to.

Figures 7 and 8 show the settings of the roller (6), which include the main cylindrical tube (18) with an axial shaft (19) to which it is connected by means of the corresponding covers (20) on its ends and on which it rotates. Such main cylindrical tube (18) has an outer square tube (21) on its side, along its entire length and partially embedded in it, through which an inner square tube (22) runs. Both movements, the rotation of the roller and the movement of the inner tube, are actioned by the aforementioned air or hydraulic motor (not represented) of the vertical structure.

Moreover, to fasten the rope (4), such outer and inner square tubes (21) and (22) show, approximately in the middle part of the roller (6), two notches (23) so that if, with the movement of the inner tube (22), the rope (4) is placed vertically on the area covered by any of such notches, the rope is "trapped" between both tubes and, thus, it is fastened.

Therefore, and on the basis of figures 1 to 5, the machine is operated as follows:
In the initial operational stage, the rope (4), from a lower horizontal position than that of the basis of the bundle (3), is entered through a pulley (24), which brings it up vertically and fastens it, through the first end, in the roller (6), to which it is fastened by means of the inner sliding tube (21) it includes and which is activated with a hydraulic or air motor.

Once it has been fastened, the roller (6) is turned to prepare, rolled around it, the required amount of rope (4) to cover the higher part of the bundle (3), as shown in figure 1.

Next, the machine pushes the bundle (3) to the inner part of the machine, to the space provided for it below the horizontal structure (9), so that the bundle pulls the rope (4) on the underside and, at the same time, unrolls It from the roller (6).

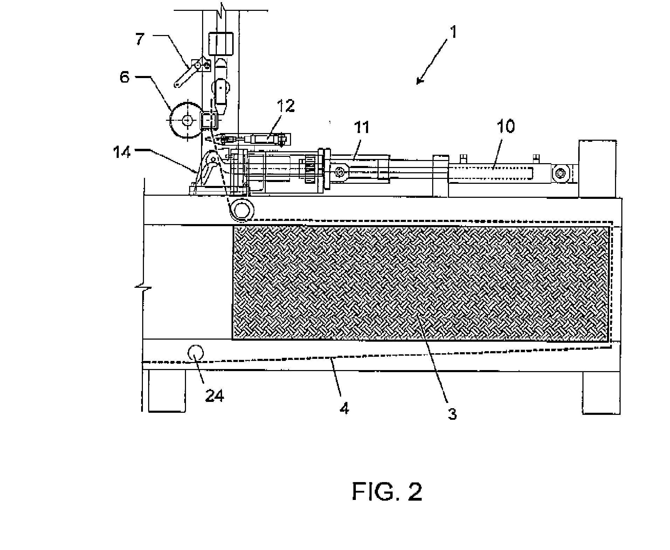

In the next movement of the machine, shown in figure 2, the locking clamp (12) opens one of its claws (13). through the respective pneumatic or hydraulic bottle (17), and the tying group, consisting of the hydraulic motor (11), clamp (12) and hook (14), activated by the hydraulic cylinder (10) placed on the horizontal structure, and moves towards the vertical structure (5) to place the clamp (12) with the claw (13) opened next to the rope (4), so that the rope is inside in it and, when such claw is closed, the rope is fixed and fastened to the clamp.

Next, the tying group, the hydraulic motor (11), consisting of the hydraulic motor (11), clamp (12) and hook (14), moves backwards by means of the same hydraulic cylinder (10), which causes the removal of the rope (4) from the roller (6).

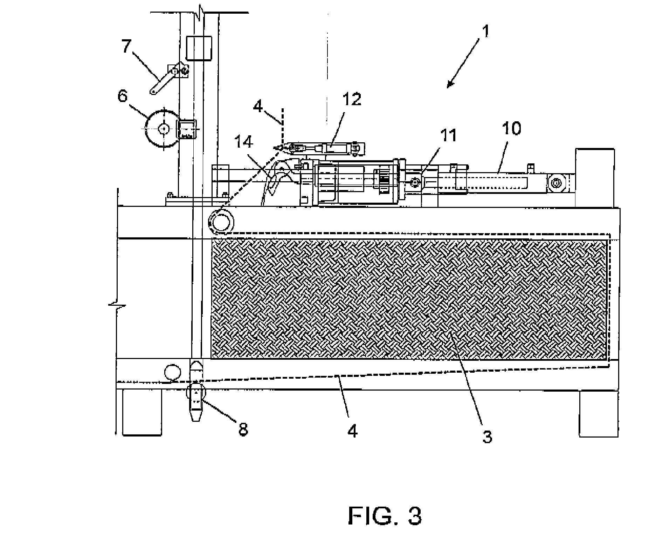

Afterwards, the machine lowers its needle (8) to be threaded through the part of the rope which is left on the underside of the rear side of the bundle (6), as shown in figure 3.

In the next operational stage, the machine lifts the needle (8) and thus the threaded rope, making it move again vertically through the roller (6) to fasten it to one of its notches (23).

The roller (6) fastens the rope again through the inner sliding tube (21) it includes, activated with the aforementioned pneumatic or hydraulic motor.

At this stage, the locking clamp (12) opens Its second claw (13) by means of the corresponding pneumatic or hydraulic bottle (17), and the tying group, consisting of the hydraulic motor (11), clamp (12) and hook (14), moves forward again pushed by the hydraulic cylinder (10) to which it is connected, to place it on the rear side of the rope (4) inside the open claw (13), so that it will be fastened to it when closed.

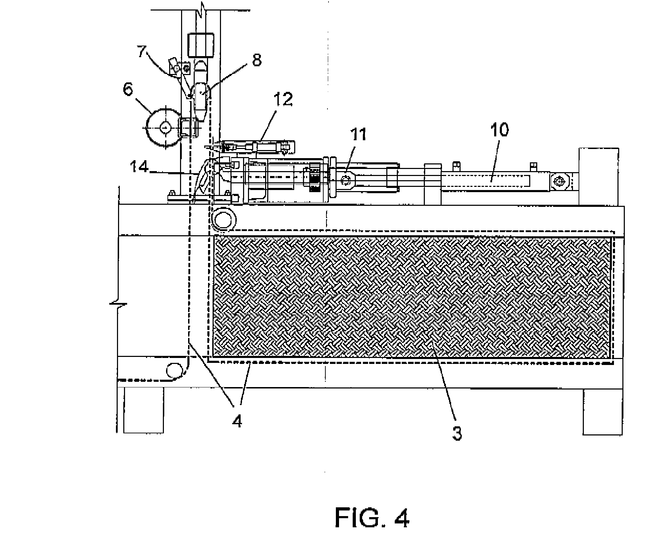

When the machine has both ends of the rope (4) fastened to each of the claws (13) of the clamp, as shown in figure 4, the cutting device is activated (7), which turns to place its heating resistance on the rear part of the rope (4) and, by means of its heat, cuts it, as the rope (4) is a plastic rope. Once the rope has been cut, the cutting device turns back to its original position. Naturally, the incorporation of another type of cutting device is not ruled out in order to cut ropes made from materials other than plastic.

In the last operational stage, in which both ends of the rope (4) around the bundle (3) are tied, the tying hook (14), activated by the hydraulic motor (11), turns 90° to pick both ends of the rope (4).

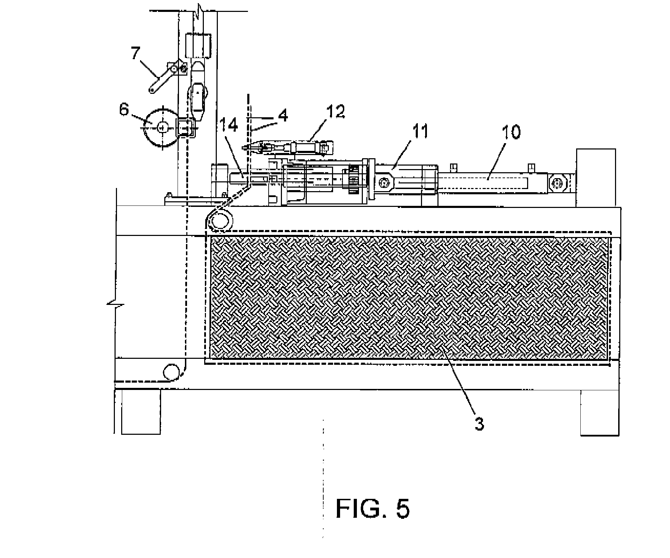

Next, the tying group, consisting of the hydraulic motor (11), clamp (12) and hook (14), moves backwards, by means of the activation of the hydraulic cylinder (10), thus tensing both ends of the rope (4), as shown in figure 5, to enable the knot to be made.

Lastly, the tying hook (14), equally by means of the hydraulic motor (11), rotates 450°, that is, a one and a quarter turn, in the opposite direction to the previously mentioned first rotation, making a knot at the ends of the rope (4).

As the nature of this invention has been adequately described, as well as the way of putting it into practice, a further explanation is not deemed necessary to be made for any expert In the subject to understand its benefits and advantages, making it evident that, within its essentiality, it can be put into practice in other forms of development that differ from the details specified by way of example, and which will achieve the protection sought, provided that the main aim is not altered, changed or modified.

## Claims

1. HIGH PRECISION BUNDLE-TYING MACHINE, particularly bundles of a compressed product, using a rope knotted around the bundle, is distinct because it includes:
- A roller (6), that when turned, pulls a first end of the rope (4) rolling it on itself, and at least one needle (8) which moves vertically to thread the opposite end of the first end of the rope (4), and a cutting mechanism (7) that cuts the rope when it reaches the required length, and,
- a tying group, consisting of at least one hydraulic motor (11) a locking clamp (12) and a tying double hook (14), which, working via a hydraulic cylinder, (10) move to fasten both ends of the string and make them turn to knot said ends.

2. A machine, according to claim 1, distinct because it includes:
- a vertical structure (5), located on the front part of the machine, to which the roller (6), the cutting device (7) and a vertically placed needle (8) are incorporated. These elements are operated by an air or hydraulic motor, and
- a horizontal structure (9). located after the vertical structure, in which the abovementioned tying group moves horizontally over a rod (16) in such a way that, via the operation of the hydraulic cylinder (10) said tying group moves closer to or away from the vertical structure.

3. A machine, according to claim 1 or 2, distinct because the clamp (12) has two articulated (13) claws, each one being able to assume an open or closed position by means of both pneumatic bottles (17) to which each one Is linked.

4. A machine, according to any claim between 1 and 3, distinct because the roller (6) consists of a main cylindrical tube (18) with an axial shaft (19) on which it rotates. On the side, an outer square tube (21) through which an inner square tube runs (22); and where said outer (21) and inner (22) tube show, approximately in the middle part of the roller (6), two notches (23).

5. A machine, according to any of the claims between 1 and 4. distinct because the rope (4) is a plastic rope.

6. A machine, according to claim 5, distinct because the cutting device (7) which has a heat resistance to cut the rope (4).

7. BUNDLE-TYING PROCEDURE distinct because it consists of:
- Rolling-up of a rope at one of its ends,
- Vertical movement of a needle,
- Threading through the needle of the opposite end of the rope rolled up,
- Cutting of the rope when it reaches a predetermined length,
- Fastening of both ends of the rope, and
- Rotation of tying devices to Join the ends of the rope.
